# EUROPEAN PATENT APPLICATION

(11) **EP 0 779 245 A1**
(43) Date of publication of application: **18.06.1997**
(21) Application number: 96830589.6
(22) Date of filing: 19.11.1996
(51) Int. Cl.: C02F 1/48, B65D 23/12

(54) **Plastic container with magnetic device to soften water, in particular for use in steam irons and for similar purposes**

(30) Priority: 12.12.1995 IT MI950844 U
(71) Applicant: Bocceda Idro-Superblocc S.r.l., 05100 Terni (IT)
(72) Inventor: Ruggiero, Fioravanti, 05035 Narni (TR) (IT); Maino, Giuseppe, 20076 Cornovecchio (LO) (IT)
(74) Representative: Bazzichelli, Alfredo

(57) **Abstract**

A plastic container with a magnetic device to soften water, in particular for the production of soft water for steam irons or similar purposes, which comprises a plastic container (2) of cylindrical shape, in the base of which a housing (3) is formed to contain a permanent magnet (4) of suitable strength, said magnet housing being arranged either in a vertical or in an horizontal direction, but at the centre of the base in order to allow good ionisation of the water contained in the container, the magnet being inserted from the base of the container into its housing in such a way as to prevent any direct contact with the water in the container. A ferritic reflector (5) is provided in order to avoid any magnetic dispersion from the bottom of the container. The bottom plug (6) holds the reflector and the magnet in their housing.

## Description

The present invention relates to the field of the purification of water for steam irons or the like requiring a limited amount of tap water purified of the calcium contained therein.

A number of devices are known from the present state of the art, such as containers filled with salts for the reduction of calcium, electrical devices discharging aqueous calcium ions and many others.

It is a known fact that water is a polar liquid, that is to say at a molecular level it shows a group of atoms or subatomic particles with equal electric charges of opposite value, separated by a small distance, for example the hydrogen atom with its nuclear proton and the electron in orbit around it.

Part of the molecule of a polar liquid has a positive charge, while the other part has a negative charge, and this means that the molecule becomes a miniature low-power two-pole magnet, but when the magnetic or electric field is changed this causes rotation of the molecule itself in a preferred direction, which changes according to the charge and intensity of the field.

According to the above principle of physics, it has surprisingly been found that when a polar fluid is treated with a suitable magnetic field it is possible to control the atom orientation effect, and thus the charge of the atoms. In the case of water the variation in orientation can influence the stability of the molecule, as in the case of orthohydrogen, which is unstable when compared with the parahydrogen form.

If water is treated with a suitable magnetic field it is possible to influence the calcium carbonate crystals (calcite) present in the fluid so as to render them hydrated (water saturated) and change them into the form of "aragonite" (CaCO3). The effect of hydration is to soften the calcite crystals and change them into aragonite, which melts in water and breaks away from the heat exchanger surface.

Therefore a specific magnetic field encourages the solubility of salt crystals present in the water, decreasing the surface tension of the water as it encourages elimination of the crystals themselves.

Given that water has an overall charge that is substantially negative, when it passes between the two poles of a magnetic field its irregular configuration is modified and arranged in an organised manner. The calcium, which is originally negative, now in a positive form is attracted to the water molecules and held in colloidal suspension in the form of a supermicroscopic and impalpable solution, which is no longer deposited, leaving all the advantages in the actual water from which it is purified.

As well as preventing the formation of deposits the magnetised water gradually dissolves the layers of calcium that have already formed in the system, that is to say on the parts of the container.

The process indicated above has the effect of reducing the surface tension of the water and of producing softened water using a natural method.

The water containing the calcium, that is to say hard water from a household tap, has a high surface tension and a prevalently negative charge; in practice it is as if the water molecules were surrounded on their surface by a film or membrane, which operates inwards and prevents the absorption of calcium, in this way the calcium that is no longer absorbed by the water is deposited on the internal surfaces such as pipes, tanks, resistors and heater plates, causing a great deal of damage and an increase in the cost of heat exchange and maintenance.

On the contrary a magnetic field increases the solubility characteristics of the water, changing its polarity and reducing its surface tension, and in this way deposition of calcium or calcium carbonate no longer occurs.

The advantages of an absence of calcium in a steam iron are obvious and are known to all, suffice to say that a layer of calcium only one millimetre thick deposited on the plate or resistor of a steam iron results in a 10% increase in the energy required for heat exchange.

The present invention therefore proposes a plastic container with a magnetic device for softening of the water, in particular indicated for the production of softened water for steam irons or similar uses, comprising a container of plastic material with a cylindrical shape, in the base of which a housing is formed to hole a ferrite steel magnet of suitable strength, said magnet housing being arranged either in a vertical or in a horizontal direction, but at the centre of the base in order to allow good ionisation of the water in the container, the magnet being inserted into its housing from the base of the container so as to prevent any direct contact with the water in the container itself. A magnetic reflector is foreseen so as to prevent any magnetic dispersion from the bottom of the container. The bottom plug holds the reflector and the magnet into their housing.

For a clearer understanding of the present invention, reference will now be made, as an example, to the enclosed drawings, in which:
- Figure 1 is a section view illustrating the device according to the invention with a large magnet inside it;
- Figures 2 and 2A illustrate another type of bottom, equipped with feet and with a magnet placed in a horizontal direction and of parallelepipedic shape, covered by a circular reflector and an outer cover.

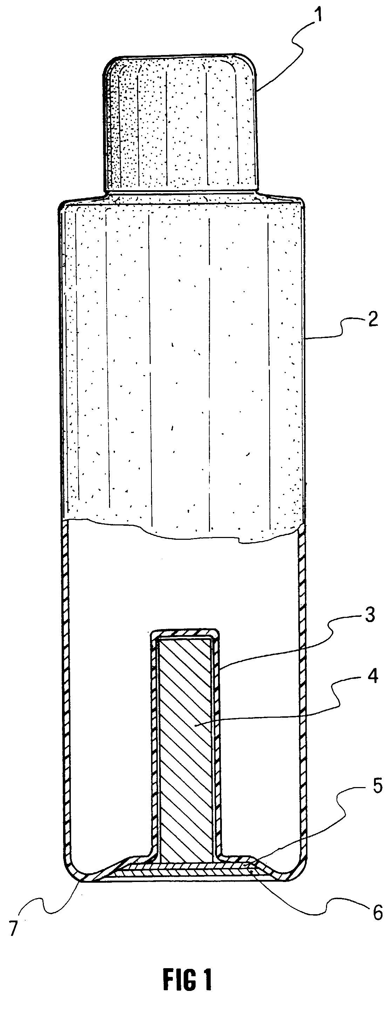

With reference to figure 1, the present invention provides a container 2 made of plastic with a top plug 1 and a part of the container 3 with a magnetic device 4, made up of a permanent magnet of ferrite steel of suitable strength, said housing for the magnet being arranged either in a vertical direction or in an horizontal one, but at the centre of the base to allow good ionisation of the water in the container 2, the magnet 4 being inserted from the base 7 of the container into its housing 3 so as to prevent any direct contact with the water in the container itself. A magnetic reflector 5 made of non-magnetic steel serves to prevent any magnetic dispersion towards the bottom of the container. The bottom plug 6 made of ABS or other plastic material holds the reflector 5 and the magnet 4 in their ùhousing and is sealed or glued to the base of the container.

The container 2 can be made of any plastic material, although RE is preferred, and the magnet is preferably made in a modular form of elements placed one on top of another.

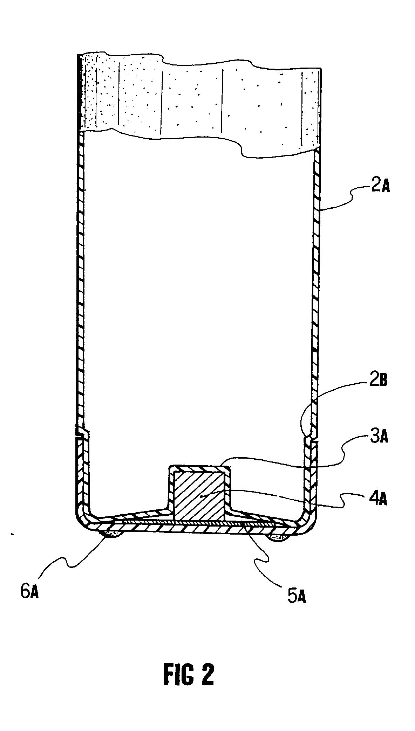

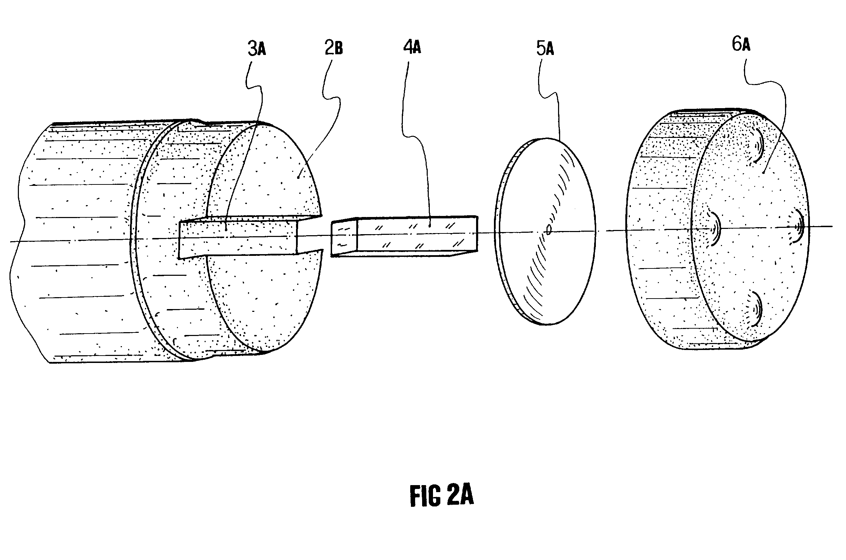

Figure 2 in a cross section and Figure 2A more clearly in an exploded view illustrate a different type of container, the top part of which is omitted, as it is identical to that of the previous embodiment.

The base of the container in this embodiment is made with the end 2B having a smaller diameter than the diameter of the top part 2A, so as to form a central recess 3A to house the magnet 4A. The outer bottom element 6B adapts to the end 2B by frictional fit, and can be fixed thereto either with glue or by locking. The bottom 6B comprises externally three or more bearing feet 6A to make the container 2A more stable. The magnet 4A in this case is shaped as a parallelepiped placed in a horizontal direction, having the same length as the diameter of the end 2B, which is fitted to the end by means of the recess 3A having the same cross-section as the magnet 4A. The magnetic reflector 5A is made up of a circular ferritic steel element having the same length as the magnet 4A.As can be seen this form of construction is different from the preceding one, but as regards the rest it has the same characteristics.

The use of the device is as follows:

The container 2 is filled with tap water after removing the plug 1. It is now sufficient to wait approximately 15 minutes in order to obtain softened water to pour into the steam iron. The water treated in this manner will maintain the positive charge received from the magnet 4 for a few hours, making it easier and less fatiguing to iron, as the iron moves more easily over the fabric.

The calcium will no longer be deposited on the plate and on the steam iron resistor, giving great advantages in terms of energy saving and maintenance operations. The saving will also be of an ecological nature, as it is not necessary to use plastic flacons or bottles which are then discarded into the environment as waste, which is the case when using distilled water or other products. The invention has a long life, does not require maintenance, and only has to be kept filled with tap water to be ready for use at need.

## Claims

1. A container (2) made of plastic with a top plug (1) and container (3) with magnetic device (4), made up of a permanent magnet in ferrite steel of suitable strength, said magnet housing being arranged either in a vertical direction or in an horizontal direction, but at the centre of the base to give good ionisation of the water contained in the container (2), the magnet (4) being inserted from the base (7) of the container into its housing in such a way as to prevent any direct contact with the water contained in the container, further characterised by a bottom plug (6) in ABS or other plastic material that holds the metal reflector (5) and the magnet (4) in place in their housing and is sealed or glued to the base of the container (2).

2. The container according to claim 1, which is made of plastic material, preferably PE, and which has a magnet (4) made preferably in a modular form with elements placed one on top of the other.

3. The container according to the preceding claims, which in alternative has a base (2B) made with a diameter smaller than the diameter of the top part (2A) in such a way as to house the bottom unit (3A) in the shape of a cylindrical cap, which adapts to form a connection fit with said base and can be fixed thereto either by gluing or by a connection fit, the bottom (3A) having on its outside three or more bearing feet (6A) to make the container (2A) more stable.

4. The container according to claim 3, in which the bottom end (2B) thereof is provided with a recess (3A) of rectangular cross-section to house said magnet (4A) inserted into said recess, said magnet (4A) having a parallelepipedic shape and being locked into position by means of said reflector (5a) and said outer bottom (6B) being mounted on said bottom end (2B).

5. A plastic container with magnetic device to soften water, in particular for production of soft water for steam irons or similar purposes, substantially as described and claimed.
